# EUROPEAN PATENT APPLICATION

(11) **EP 1 439 450 A2**
(43) Date of publication of application: **21.07.2004**
(21) Application number: 04001088.6
(22) Date of filing: 20.01.2004
(51) Int. Cl.: G06F 1/00, G06F 17/60

(54) **License distribution management server, license reissue device and storefront server for selling licenses**

(30) Priority: 20.01.2003 JP 2003010650
(71) Applicant: MATSUSHITA ELECTRIC INDUSTRIAL CO., LTD., Kadoma-shi, Osaka 571-8501 (JP)
(72) Inventor: Uemura, Tomonori, Tokyo 144-0046 (JP); Tsurubayashi, Ken, Yokohama-shi, Kanagawa 244-0003 (JP); Sato, Mitsuhiro, Atsugi-shi, Kanagawa 243-0216 (JP)
(74) Representative: Grünecker, Kinkeldey, Stockmair & Schwanhäusser Anwaltssozietät

(57) **Abstract**

A digital contents license sale system for managing licenses for digital contents data and realizing appropriate distributionof digital contents is tobeprovided. Forapurpose as such, the electronic license sale system includes purchase certificate generating means for generating a purchase certificate on the basis of a license purchase request sent by a client terminal via a network, purchase certificate providing means for confirming reception of the purchase certificate by the client terminal by returning the purchase certificate to the client terminal via the network, account settling means for settling an account of pertinent trading only when the client terminal has received the purchase certificate, and license generating means for generating license information matching the pertinent purchase certificate by receiving the purchase certificate from the client terminal via the network.

## Description

### BACKGROUND OF THE INVENTION

### Field of the Invention

The present invention relates to a license digital contents sales system for managing licenses for digital contents data and realizing appropriate distribution of digital contents.

### Description of the Prior Art

Digital contents consisting of digital data, unlike traditional analog data, are subject to no qualitative deterioration even if they are copied over and over again. Therefore, it is indispensable for a service using digital contents to prevent copyright infringements, such as copying and reuse of digital contents without authorization by the copyright owner.

In this respect, the development of cryptography has contributed to enhancing the security level of digital contents. An example of the prior art for preventing copyright infringements using such cryptography is disclosed in the Japanese Patent Disclosure No. 11-259574.

The example of the prior art disclosed therein is a method of managing the distribution of licenses for digital contents by use of the digital contents and usage rules accompanying those contents, whereby the state in which operation system functions are at work to watch and/or listen to digital contents is kept track of; when a user issues a request for actuating digital contents to a digital management system managing the digital contents, the system monitors the operation of those digital contents, generates pay-per-use data including both time length-based and frequency-based data and fee charging data for the digital contents, and prevents illegal acts, such as using digital contents without paying for them, by notifying a centrally operated license management center of the findings of monitoring.

However, the conventional method described above involves aproblemthat, inordertoactuallywatchand/orlistentodigital contents, the user has to accomplish network connection to the license management center for himself or herself, and cannot watch or listen to such contents with a device having no such function. Moreover, from the user's point of view, his or her privacy is not protected because information on the use of digital contents is made known to a third party. There is another problem that there is no mention of the handling of the license and the fee when data communication is interrupted before completion.

### SUMMARY OF THE INVENTION

In order to solve the problems noted above, according to a first aspect of the present invention, there is provided a license distribution management server for distributing licenses for watching and/or listening to digital contents, essentially configured of purchase certificate generating means for generating a purchase certificate on the basis of a license purchase request received via a network, and license generating means for receiving a license request via the network and generating a license matchingthepurchasecertificatecontained in the license request. This makes possible distribution of licenses on the basis of purchase certificates sent by persons each requesting the purchase of a license (clients).

The license distribution management server according to the invention may also have a configuration further provided with a purchase certificate database for holding the purchase certif icates, wherein the license generating means, on the basis of an account settlement completion notice received via the network, register account settlement completion information matched with the purchase certificate into the purchase certificate database. This makes it possible to issue licenses only against purchase certificates for which account settlement has been completed by generating pertinent license information only when the ID of the purchase certificate received via the network is included among the IDs of the registered purchase certificates and the completion of account settlement is stated.

The license distribution management server according to the invention may also have a configuration in which the account settlement completion information includes at least information concerning the number of times a license can be granted. This makes it possible to issue to each purchaser only as many licenses as prescribed in his or her purchase certificate.

The license distribution management server according to the invention may also have a configuration in which the license generating means generate a license when the purchase certificate contained in the license request received via the network is registered in the purchase certificate database and pertinent account settlement completion information is registered. This makes it possible to issue a license only against a purchase certificate for which account settlement has been completed.

The license distribution management server according to the invention may also have a configuration further provided with license granting means for distributing the licenses, wherein the license granting means, when having received a reception notice for the license via the network, delete the purchase certificate matching the license from the purchase certificate database. This makes it possible to issue a license only once to a license purchaser.

The license distribution management server according to the invention may also have a configuration further provided with license granting means for distributing the licenses, wherein the license granting means, when having received a reception notice for the license via the network, update the number of times the contents are provided.

The license distribution management server according to the invention may also have a configuration wherein the purchase certificate generating means generate a purchase certificate to which an electronic signature by which any alteration of the purchase certificate can be detected and detects is generated the presence or absence of alteration on the basis of the electronic signature contained in the reception notice of the purchase certificate returned from a client terminal.

The license distribution management server according to the invention may also have a configuration wherein the purchase certificate generating means generate a purchase certificate to which an ID for distinguishing each individual purchase certificate is attached, register the ID into the purchase certificate database, collate the ID contained in the reception notice of the purchase certificate returned from the client terminal with the purchase certificate database and, if the ID is found consistent, instruct the license generating means to generate a license.

The license distribution management server according to the invention may also have a configuration further provided with generated purchase certificate invalidating means for deleting, out of the purchase certificates stored in the purchase certificate database, those having passed a certain period of time since their generation.

A license reissue device according to the invention has a configuration to request a license distribution management server provided with a purchase certificate database holding license purchase certificates and account settlement information to regenerate purchase certificates and account settlement information already deleted from the purchase certificate database.

The license reissue device according to the invention may also have a configuration to request the license distribution management server also to regenerate information regarding the number of times the license has been granted.

A storefront server for selling licenses for digital contents according to the invention has a configuration having account settling means for settling accounts of license trading and purchase certificate providing means for transmitting a purchase certificate to a client terminal having sent a pertinent purchase request, wherein the purchase certificate providing means, when having received a reception notice of a purchase certificate from the client terminal, instruct the account settling means to settle a pertinent account.

The storefront server according to the invention may also have a configuration wherein the purchase certificate providing means, when having received the reception notice of the purchase certificate, transmit a request for detection of the presence or absence of alteration of an electronic signature contained in the reception notice.

The storefront server according to the invention may also have a configuration further provided with a purchase certificate ID database for holding IDs for distinguishing the purchase certificate, wherein the purchase certificate providing means transmit the purchase certificate, register the ID of the purchase certificate into the purchase certificate ID database, collate an ID of a purchase certificate returned from the client terminal, when it has been received, with the purchase certificate ID database and, if the ID is found consistent, instruct the account settling means to settle the pertinent account.

The storefront server according to the invention may also haveaconfigurationfurtherprovidedwithapurchasecertificate ID database for holding IDs for distinguishing a purchase certificate container containing one or more purchase certificates, wherein the purchase certificate providing means generate and transmit the purchase certificate container, register an ID of the purchase certificate container into the purchase certificate ID database, collate an ID of a purchase certificate container returned from the client, when it has been received, with the purchase certificate ID database and, if the ID is found consistent, instruct the account settling means to settle the pertinent account.

The storefront server according to the invention may also have a configuration wherein the purchase certificate providing means, if the ID is found consistent as a result of the collation, delete the pertinent ID from the purchase certificate ID database.

The storefront server according to the invention may also have a configuration wherein the purchase certificate providing means are provided with failed-to-grant purchase certificate deleting means which, when a prescribed period of time has passed since the time a purchase certificate was transmitted, delete the pertinent ID from the purchase certificate ID database.

A client terminal for purchasing licenses for digital contents according to the invention has a configuration in which the terminal receives and holds a purchase certificate via a network, transmits a reception notice of the purchase certificate and, when it transmits a license request, attaches the held purchase certificate to the license request.

As hitherto described, according to the present invention, first it is made possible to settle the account of a license purchase only when the client terminal has received a purchase certificate by providing the client terminal with purchase certificate generating means for generating a purchase certificate on the basis of a license purchase request sent by a network, purchase certificate providing means for confirming reception of the purchase certificate by the client terminal by returning the purchase certificate to the client terminal via the network, account settling means for settling an account of pertinent trading only when the client terminal has received the purchase certificate, and license generating means for generating license information matching the pertinent purchase certif icate by receiving the purchase certif icate from the client terminal via the network.

There is an advantage of making it possible to issue a license only against a purchase certificate for which the account has been already settled by further providing a purchase certificate databasefor holding purchasecertificates, wherein the license generating means register account settlement completion information, matched with purchase certificates, into the purchase certificate database on the basis of account settlement completion notices received via the network, and generating pertinent license information only when the ID of a purchase certificate received via the network is included among the IDs of the registered purchase certificates and states the fact of account settlement completion.

There is another advantage of making it possible to issue a license only as many times as prescribed for a given purchase in his or her purchase certificate by including in the account settlement completion information at least information on the number of times the license can be granted.

There is still another advantage of making it possible to issue a license only against a purchase certificate for which account settlement has been completed by so configuring the license generating means as to generate a license when the purchase certificate contained in a license request received via the network is registered in the purchase certificate database and pertinent account settlement completion information is registered.

There is yet another advantage of making it possible to issue a license only once to any purchaser by further providing license granting means for distributing licenses and causing the license grantingmeans, when it receives the reception notice of a license via the network, to delete the purchase certificate matching the license from the purchase certificate database.

The above-described objects and the advantages of the present invention will become more apparent from the following description when taken in conjunction with the accompanying drawings.

### BRIEF DESCRIPTION OF THE DRAWINGS

Fig. 1 is a block diagram of a license distribution management system, which is a first preferred embodiment of the present invention.
Fig. 2 illustrates an example of field configuration of records managed under a product information table in the first preferred embodiment of the invention.
Fig. 3 illustrates an example of field configuration of records managed under a purchase certificate table in the first embodiment of the invention.
Fig. 4 illustrates an example of field configuration of records managed under a purchase certificate ID database in the first embodiment of the invention.
Fig. 5 is a control flowchart for a client terminal in the first embodiment of the invention.
Fig. 6 is a control flowchart for purchase certificate providing means in the first embodiment of the invention.
Fig. 7 is a control flowchart for purchase certificate generating means in the first embodiment of the invention.
Fig. 8 is a control flowchart for purchase certificate providing means in the first embodiment of the invention.
Fig. 9 is a control flowchart for a client terminal in the first embodiment of the invention.
Fig. 10 is a control flowchart for purchase certificate providing means in the first embodiment of the invention.
Fig. 11 is a control flowchart for account settling means in the first embodiment of the invention.
Fig. 12 is a control flowchart for license generatingmeans in the first embodiment of the invention.
Fig. 13 is a control flowchart for client terminal means in the first embodiment of the invention.
Fig. 14 is a control flowchart for license generating means in the first embodiment of the invention.
Fig. 15 is a control flowchart for a client terminal in the first embodiment of the invention.
Fig. 16 is a control flowchart for license granting means in the first embodiment of the invention.
Fig. 17 is a block diagram of a license sale system, which is a second preferred embodiment of the invention.
Fig. 18 is a block diagram of a license sale system, which is a third preferred embodiment of the invention.
Fig. 19 is a control flowchart for generated purchase certificateinvalidatingmeansinthethirdpreferredembodiment of the invention.
Fig. 20 is a block diagram of a license sale system, which is a fourth preferred embodiment of the invention.
Fig. 21 is a control flowchart for failed-to-grantpurchase certificate ID deleting means in the fourth preferred embodiment of the invention.
Fig. 22 shows a product list screen in the first embodiment of the invention.
Fig. 23 shows the data structure of a purchase request 402 in the first embodiment of the invention.
Fig. 24 shows the data structure of a purchase issue request 403 in the first embodiment of the invention.
Fig. 25 shows the data structure of a purchase certificate 404 in the first embodiment of the invention.
Fig. 26 shows the data structure of a purchase certificate container 405 in the first embodiment of the invention.
Fig. 27 shows the data structure of a reception certificate 406 in the first embodiment of the invention.
Fig. 28 shows the data structure of account settlement information 407 in the first embodiment of the invention.
Fig. 29 shows the data structure of an account settlement completion notice 408 in the first embodiment of the invention.
Fig. 30 shows the data structure of a license request 409 in the first embodiment of the invention.
Fig. 31 shows the data structure of a license issue request 410 in the first embodiment of the invention.
Fig. 32 shows the data structure of a license 411 in the first embodiment of the invention.
Fig. 33 shows the data structure of a license reception notice 412 in the first embodiment of the invention.
Fig. 34 shows the data structure of a license reissue request 414 in the second embodiment of the invention.
Fig. 35 shows the data structure of a license reissue approval notice 415 in the second embodiment of the invention.

### DESCRIPTION OF THE PREFERRED EMBODIMENTS

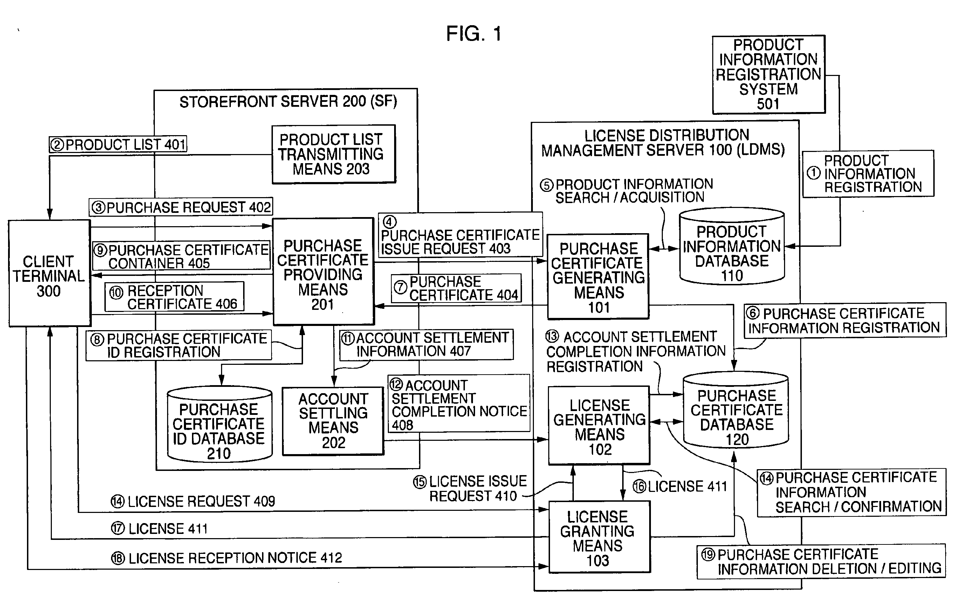

Preferred embodiments of the present invention will be described below with reference to Fig. 1 through Fig. 35. The invention, however, is in no way limited by these preferred embodiments, but can be implemented in various other modes within the scope of its essentials.

### First Embodiment (Embodiment 1)

Fig. 1 is a functional block diagram of a license sale system, which is a first preferred embodiment of the present invention. In Fig. 1, reference numeral 100 denotes a license distribution management server (LDMS) ; 200, a storefront server (SF) ; and 300, a client terminal. The LDMS 100 includes purchase certificate generating means 101, license generating means 102, license granting means 103, product information database 110 and purchase certificate database 120. The SF 200 includes purchase certificate providing means 201, account settling means 202, product information providing means 203 and a purchase certificate ID database 210. In the diagram, any term followed by a numeral, such as "product list 401", denotes data communicated between functional blocks, and any term involving no numeral, such as "product information search/acquisition", denotes an action on the pertinent database.

The way in which the license distribution management system, which is Embodiment 1, handles a supposed case in which the user desires to purchase a license for an electronic book on the Internet will be described belowwith reference to Fig. 1 through Fig. 16.

Digital contents pertaining to the invention cannot be accessed even if they are distributed unless their prospective user has a license therefor. This arrangement is realized by encrypting the digital contents in advance, and including the decryption key therefor in the license. The productinformation database 110 is architected by use of an SQL database, and it is supposed that product information (license information) is registered in advance from a product information registration terminal 501 by use of an insert sentence in SQL.

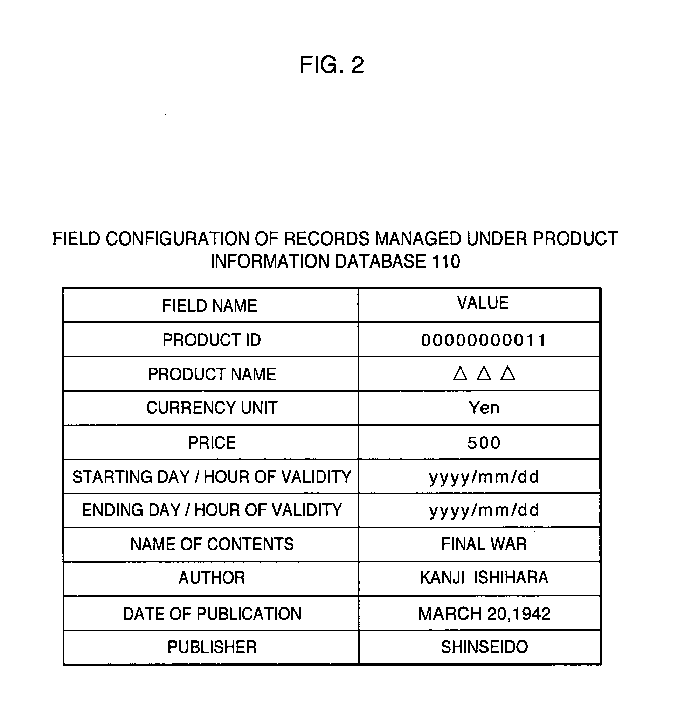

Fig. 2 illustrates the field configuration of records managed under the product information database 110. In this field configuration of records managed under the product information database 110, the product ID is a combination of the ISBN of the book and the number of types of license. Since the system involves various devices connected by a network and communicates personal information including credit information and data including licenses for copyright protection, the confidentiality of the communication should be secured, which is realized by use of a secure protocol, such as SSL.

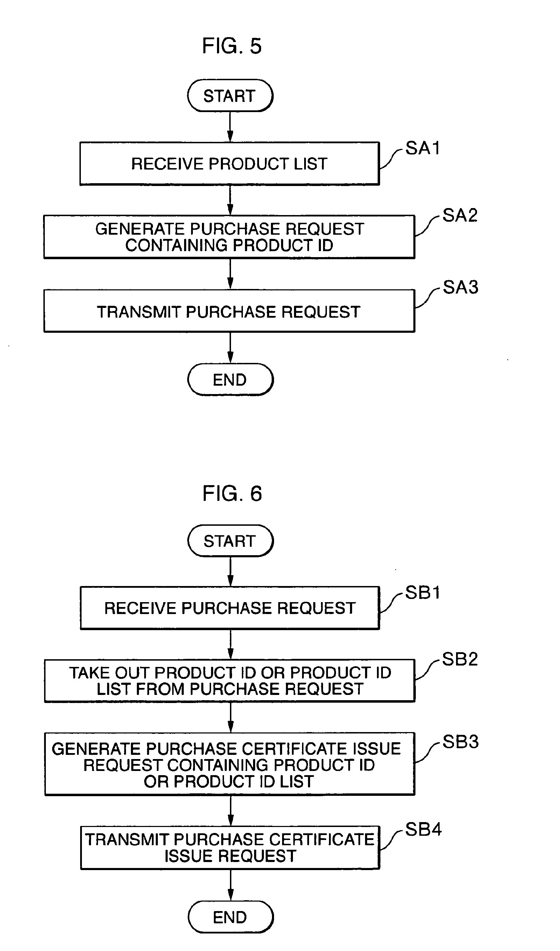

Fig. 5 is a flowchart showing the control operations of the client terminal 300 in this Embodiment 1. Processing by the client terminal 300 will be described below with reference to Fig. 5. At SA1, aproduct list 401 transmitted from the product information transmitting means 203 of the SF 200 which sells licenses for electronic book data is received and accessed. The product list 401 means description (metadata) of the usage rights on digital contents offered for sale by the SF 200, and includes the items of information shown in Fig. 2. Here, the client terminal 300 is a PC used by the user, and the means to receive the product list 401 transmitted from the product information transmitting means 203 is implemented using a network interface board, its driver software, a WWW browser and a terminal application program. The product information transmitting means 203 of the SF 200 is implemented using a network interface board, its driver software, and a WWW server, the purchase certificate providing means 201 is implemented using a network interface board, its driver software, a WWW server and CGI or Servlet.

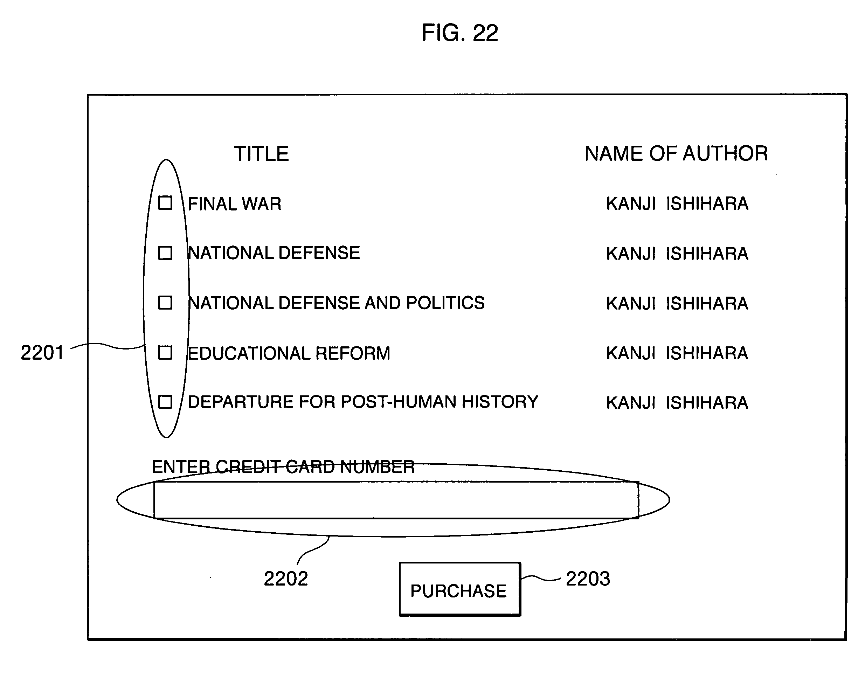

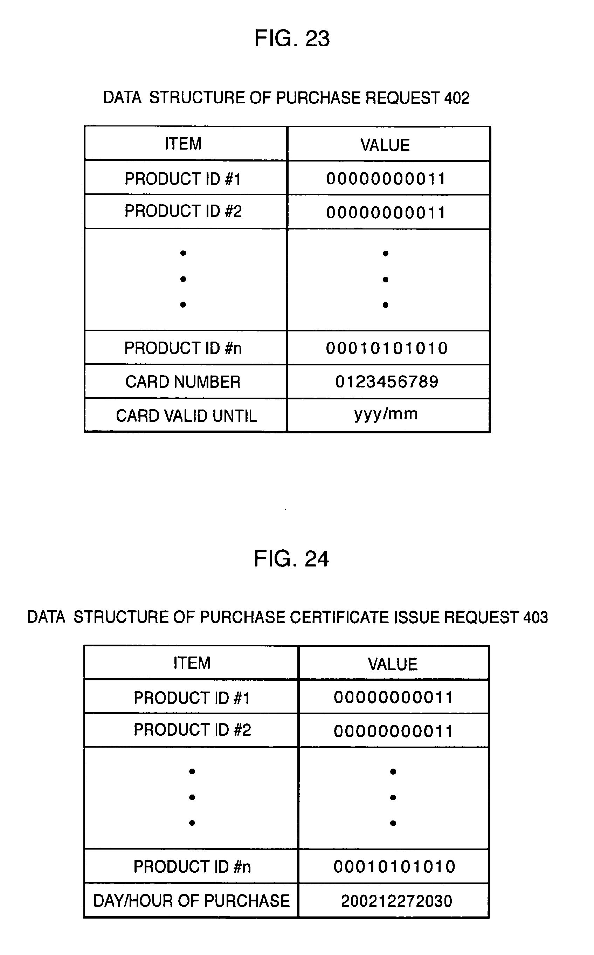

The product list 401 to be transmitted can be realized with electronic data in the HTML format prepared by the SF 200 for use in product list presentation. The HTML data for product list presentation is transmitted to the client terminal 300, and the WWW browser presents them to the user. At SA2, a purchase request 402 is generated. This purchase request 402 has the data configuration shown in Fig. 23. If the user finds in the product list presented by the WWW browser a product (a license for an electronic book) he or she is interested to purchase, the user selects the product by manipulating the PC mouse of the client terminal 300, and enters credit card information, needed for paying the price, by operating the keyboard. Fig. 22 shows the product list screen displayed by the WWW browser. Each product is accompanied by check boxes 2201, and there further is a text box 2202 for entering the credit card information. Upon completing the product choice and the inputting of the credit card information, the user presses a purchase button 2203 with the mouse to transmit the purchase request 402. The purchase request 402 contains necessary information on the ID of at least one product intended to purchase and credit card information, and may also include other items of information. By checking the product selection check boxes 2201 for more than one product, a plurality of products can be purchased in a single deal. In this case, the purchase request 402 should include a plurality of product IDs.

The purchase request 402 is generated by the WWW browser in response to the user's pressing of the purchase button 2003 on the basis of the information entered by the user into the check boxes 2201 and the text box 2202. At SA3, the purchase request 402 generated at SA2 is transmitted to the purchase certificate providing means 201 of the SF 200. In this process, the URL of the purchase certificate providing means 201 is included in the product list 401.

Fig. 6 is a flowchart showing the control operations of the purchase certificate providing means 201 in this Embodiment 1. Processing by the purchase certificate providing means 201 of the SF 200 will be described below with reference to Fig. 6. At SB1, a purchase request 402 is received from the client terminal 300. At SB2, the received purchase request 402 is temporarily stored, and one or more product IDs contained in the purchase request 402 are taken out. At SB3, a purchase certificate issue request 403 is generated. This purchase certificate issue request 403 has the data structure shown in Fig. 24. The purchase certificate issue request 403 contains one or more product IDs and information on the purchase day/hour at the SF 200, and may also include other items of information. The purchase day/hour information here can be easily acquired by use of a clock provided in the operating computer of the SF 200. At SB4, the purchase certificate issue request 403 generated at SB3 is transmitted to the purchase certificate generating means 101 of the LDMS 100.

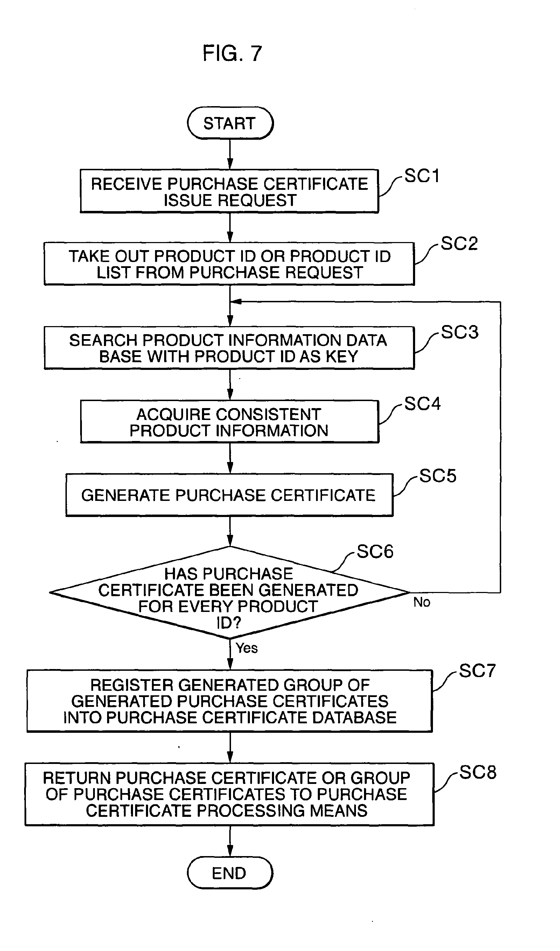

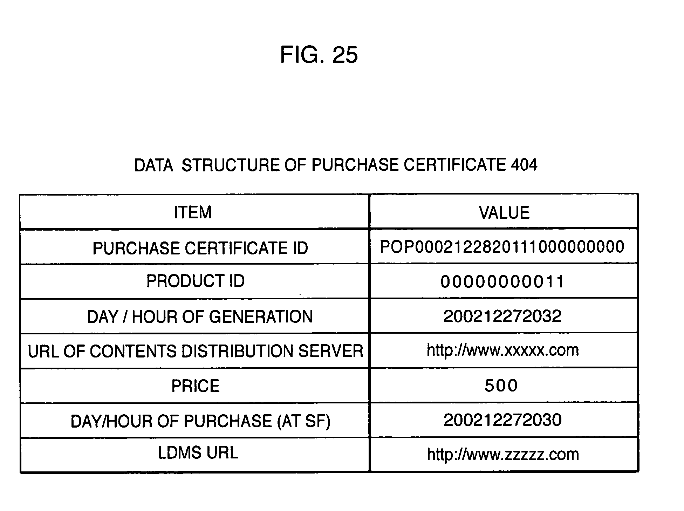

Fig. 7 is a flowchart showing the control operations of the purchase certificate generating means 101 in this Embodiment 1. Processing by the purchase certificate generating means 101 of the LDMS 100 will be described below with reference to Fig. 7. The purchase certificate generating means 101 here is implementedusinganetworkinterfaceboard, its driver software, a WWW server and CGI or Servlet. At SC1, a purchase certificate issue request 403 is received from the SF 200. At SC2, one or more product IDs contained in the purchase certificate issue request 403 are taken out. At SC3, the product information database 110 is searched with the product ID acquired at SC2 being used as the key. At SC4, as a result of the search at SC3, a record in the format of Fig. 2, whose product ID field is the product ID used as the search key mentioned above, is acquired. At SC5, a purchase certificate 404 in the format of Fig. 25 is generated by use of the record acquired at SC4.

This purchase certificate 404 contains at least the purchase certificate ID, the product ID, the contents distribution server URL, the price, the day/hour of purchase and the LDMS URL. The purchase certificate ID here is generated in a combination of sign "POP" at the top, the current date and time to seconds and a decimal eight-digit counter. The current date and time to seconds can be easily acquired from the operating computer of the LDMS 100, and the eight-digit counter is counted up by one every time a purchase certificate 404 is generated. According to this formula, if the number of purchase certificate issue requests 403 is less than 100 million per second, no same purchase certificate IDs will be generated. Further, by attaching an electronic signature to the purchase certificate 404 issued, any alteration of the purchase certificate 404 by a user in bad faith can be detected. At SC6, it is checked whether a purchase certificate 404 has been issued for every product ID acquired at SC2. If there is any product ID for which no purchase certificate 404 has been issued as yet, processing at and after SC3 is performed on that or those product IDs. At SC7, information in every purchase certificate 404 that has been generated is registered into the purchase certificate database 120. Here, the account settlement completion flag field in any record registered into the purchase certificate database 120 is set to 0. At SC8, all the generated purchase certificates 404 are collectively returned to the purchase certificate providing means 201 of the SF 200 as a response to the purchase certificate issue request 403.

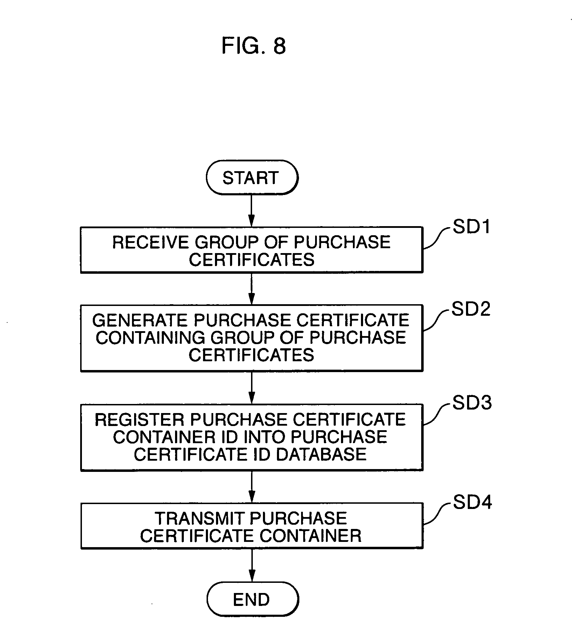

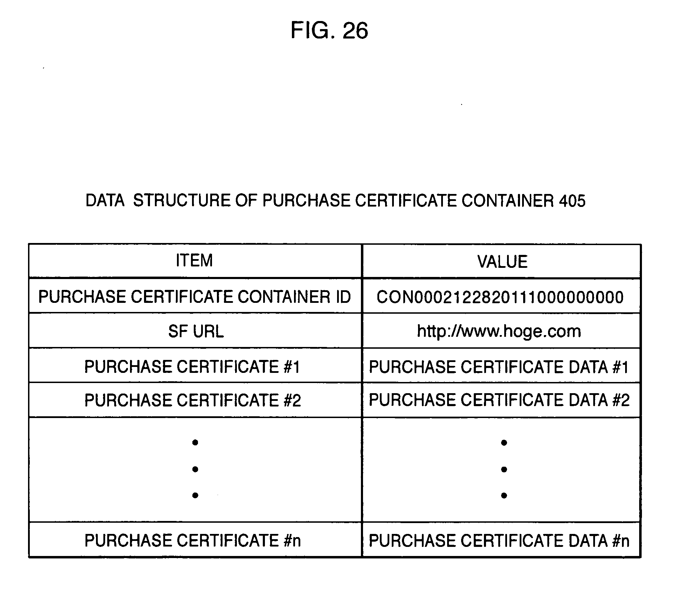

Fig. 8 is a flowchart showing the control operations of the purchase certificate providing means 201 in this Embodiment 1. Processing by the purchase certificate providing means 201 of the SF 200 will be described with reference to Fig. 8. At SD1, one or more purchase certificates 404 are received from the LDMS 100. At SD2, the one or more purchase certificates 404 are put together into one set of electronic data to generate a purchase certificate container 405 of the data structure shown in Fig. 26. This purchase certificate container 405 contains at least a purchase certificate container ID and one or more purchase certificates 404, and may also include other items of information. The purchase certificate container ID here is generated in a combination of sign "CON" at the top, the current date and time to seconds and a decimal eight-digit counter. The current date and time to seconds can be easily acquired from the operating computer of the SF 200, and the eight-digit counter is counted up by one every time a purchase certificate container 405 is generated. According to this formula, if the number of purchase certificate containers 405 is less than 100 million per second, no same purchase certificate container IDs will be generated. At SD3, the purchase certificates ID of all the purchase certificates 404 contained in the purchase certificate container 405 and temporarily stored information necessary for account settlements contained in the purchase request 402 are registered into the purchase certificate ID database 210, each matched with a purchase certificate container ID. At SD4, the purchase certificate container 405 generated at SD2 is returned to the client terminal 300 as a response to the purchase request 402.

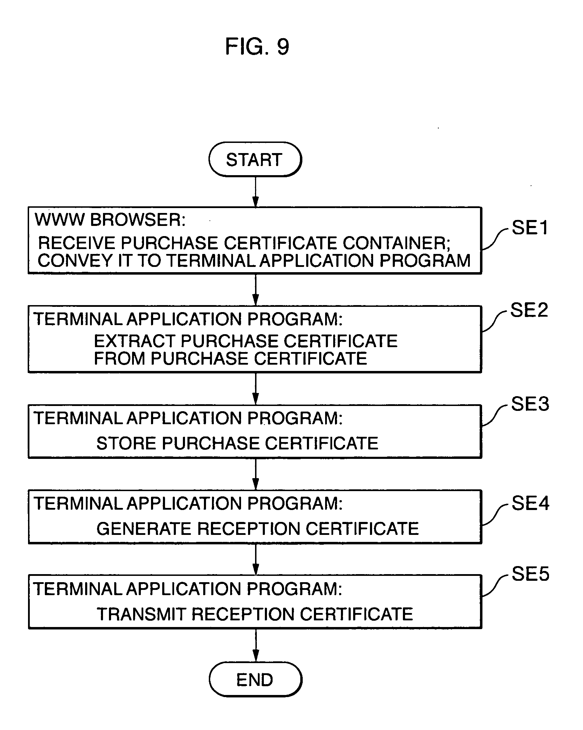

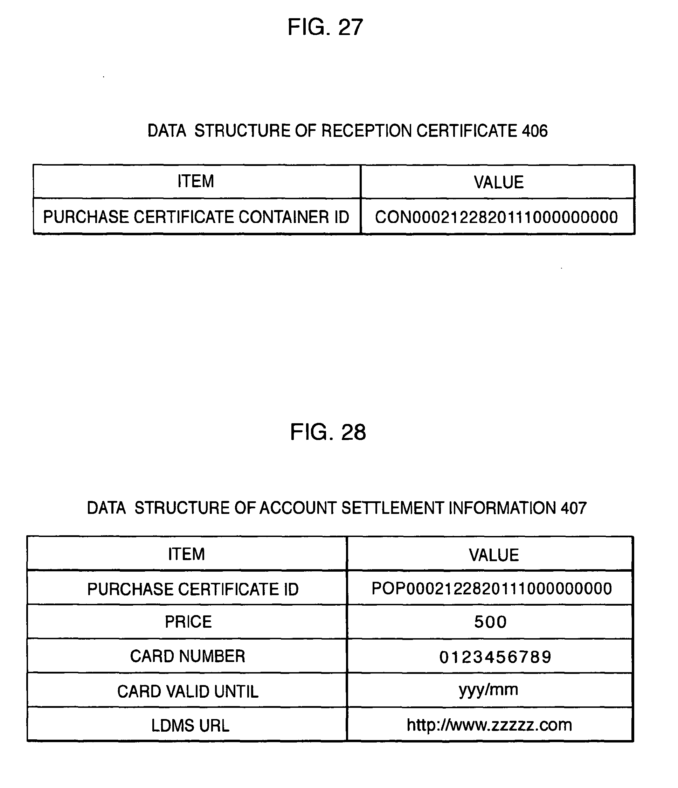

Fig. 9 is a flowchart showing the control operations of the client terminal 300 in this Embodiment 1. Processing by the client terminal 300 will be described with reference to Fig. 9. At SE1, the WWW browser receives a purchase certificate container 405 from the SF 200 and conveys it to the terminal application program. At SE2, the terminal application program unpacks the receivedpurchase certif icate container 405 and takes out one or more purchase certificates 404. At SE3, all the purchase certificates 404 taken out at SE2 are stored within the terminal application program. At SE4, a reception certificate 406 in the format of Fig. 27 for notifying the SF 200 of the reception of the purchase certificate container 405 is generated. This reception certificate 406 contains at least the purchase certificate container ID contained in the purchase certificate container 405, and may also include other items of information. The reception certificate 406 here may contain the received purchase certificate container 405 instead of the purchase certificate container ID. At SE5, the reception certificate 406 generated at SE4 is transmitted to the purchase certificate providing means 201 of the SF 200.

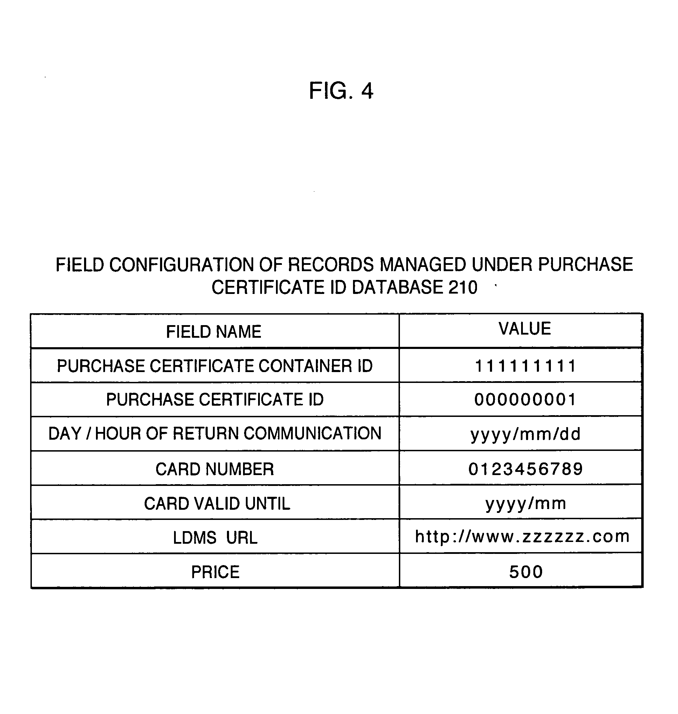

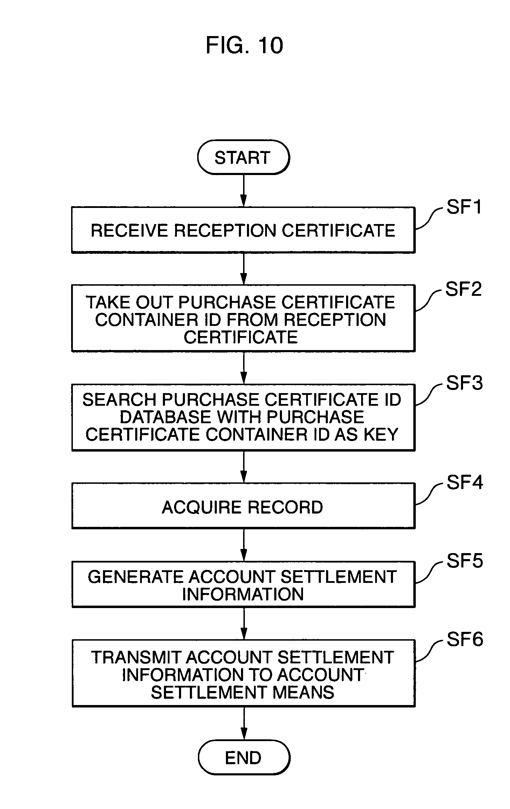

Fig. 10 is a flowchart showing the control operations of the purchase certificate providing means 201 in this Embodiment 1. Processing by the purchase certificate providing means 201 of the SF 200 with reference to Fig. 10. At SF1, a reception certificate 406 is received from the client terminal 300. At SF2, the purchase certificate container ID contained in the received reception certificate 406 is taken out. If the reception certificate 406 here contains the purchase certificate container 405' instead of the purchase certificate container ID, the purchase certificate container ID will be acquired from the purchase certificate container 405. At SF3, the purchase certificate ID database 210 is searched with the purchase certificate container ID acquired at SF2 being used as the key. At SF4, as a result of the search at SF3, a record in the format of Fig. 4, whose purchase certificate container ID field is the purchase certificate container ID used as the search key mentioned above, is acquired. At SF5, the account settlement information 407 in the format of Fig. 28 is generated by use of the record acquired at SF4, and at SF6 the account settlement information 407 is transmitted to the account settling means 202.

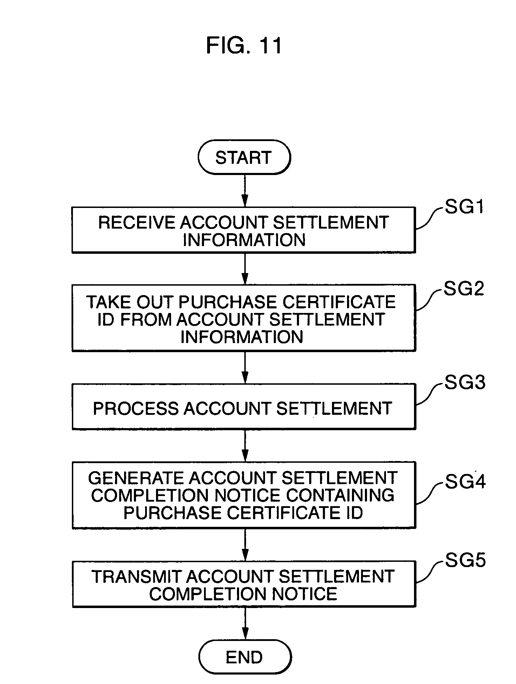

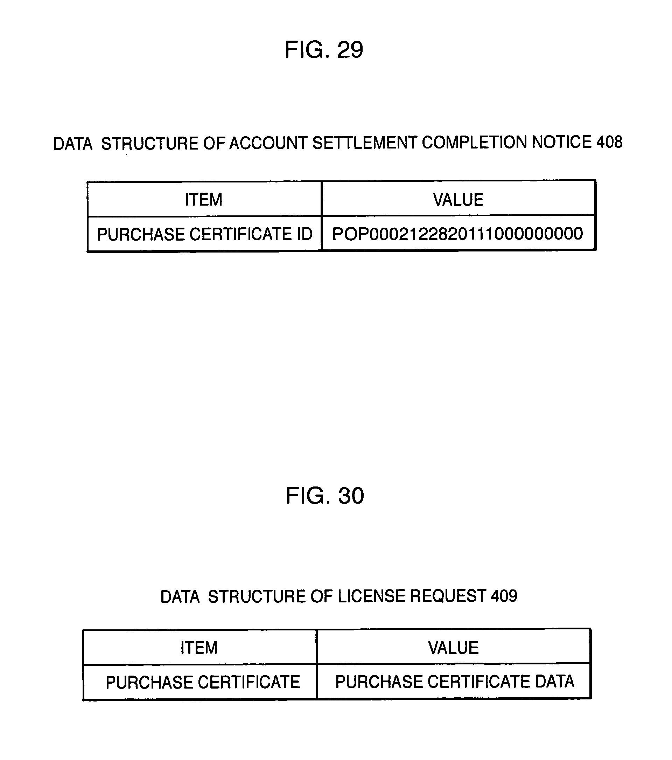

Fig. 11 is a flowchart showing the control operations of the account settling means 202 in this Embodiment 1. Processing by the account settling means 202 of the SF 200 will be described with reference to Fig. 11. The account settling means 202 here is implemented using a network interface board, its driver software, a WWW server and CGI or Servlet. At SG1, account settlement information 407 is received from the purchase certificate providing means 201. At SG2, the purchase certificate ID is taken out of the received account settlement information 407. The account is settled at SG3. The account settling means 202 here may either be able to settle the account on its own or have a configuration to extract necessary information for account settlement from the account settlement information 407 and transmit it to an external account settlement server. At SG4, if the account settlement has been normally completed, the account settlement completion notice 408 in the format of Fig. 29 certifying completion of account settlement will be generated. This account settlement completion notice 408 contains at least the purchase certificate ID, and may also include other items of information. At SG5, the account settlement completion notice 408 generated at SG4 is transmitted to the license generating means 102 of the LDMS 100. In this process, the URL of the license generating means 102 can be acquired from the account settlement information 407.

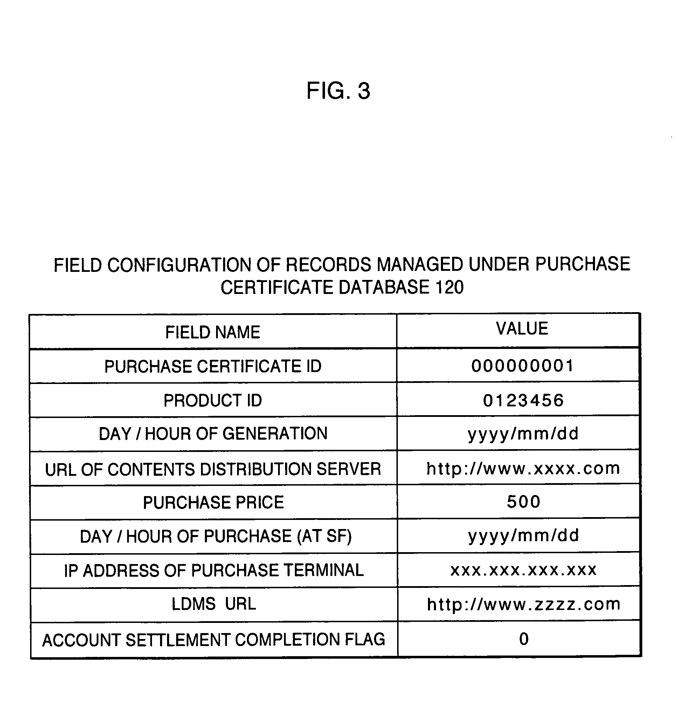

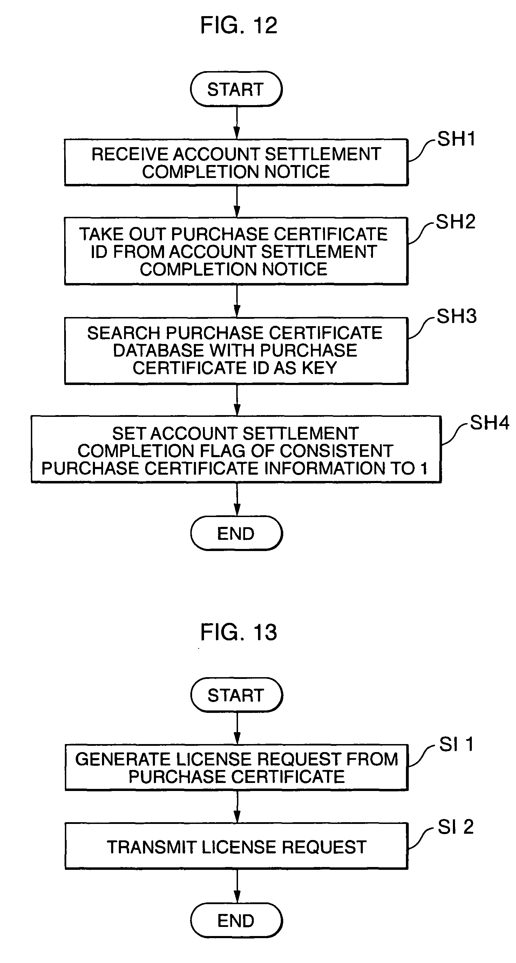

Fig. 12 is a flowchart showing the control operations of the license generating means 102 in Embodiment 1. Processing by the license generating means 102 of the LDMS 100 will be described with reference to Fig. 12. The license generating means 102 here is implemented using a network interface board, its driver software, a WWW server and CGI or Servlet. At SH1, an account settlement completion notice 408 is received from the account settlingmeans 202 of the SF 200. At SH2, the purchase certificate ID is taken out of the received account settlement completion notice 408. At SH3, the purchase certificate database 120 is searched with the purchase certificate ID acquired at SH2 being used as the key. At SH4, as a result of the search at SH3, a record in the format of Fig. 3, whose purchase certificate ID field is the purchase certificate ID used as the search key mentioned above, is specified, and the value of the account settlement completion flag field in that record is set to 1.

Account settlement is now completed, and a license using the purchase certificate 404 is ready to be provided. Granting of a license will be described below with reference to Fig. 13 through Fig. 16.

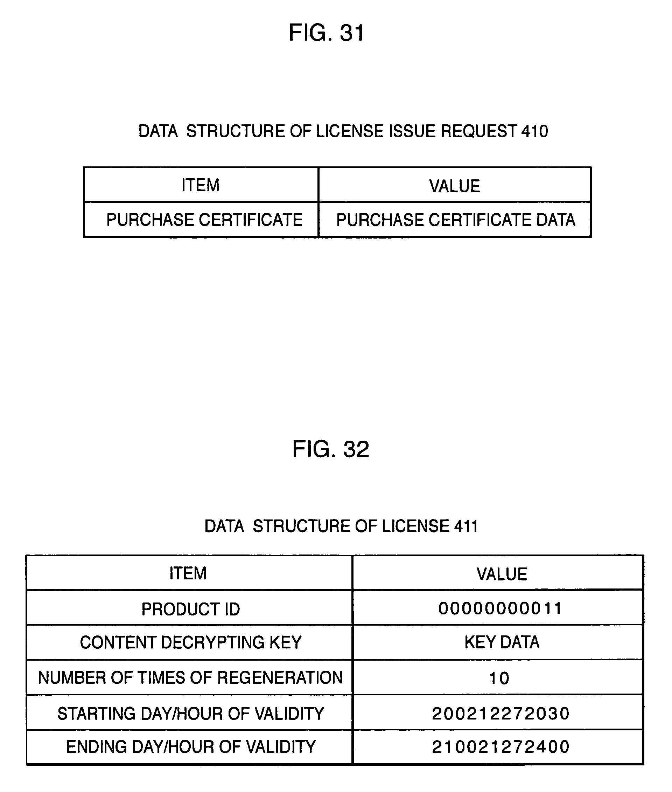

Fig. 13 is a flowchart showing the control operations of the client terminal 300 in Embodiment 1. Processing at the client terminal 300 will be described with reference to Fig. 13. At S11, the terminal application program generates a license request 409 in the format of Fig. 30 by use of the purchase certificate 404 stored at SE3. This license request 4 09 contains the purchase certificate 404 of the pertinent license, and may also include other items of information. At SH2, the license request 409 generated at SH1 is transmitted to the license granting means 103 of the LDMS 100. In this process, the URL of the license granting means 103 can be acquired from the purchase certificate 404. Next will be described processing by the license granting means 103 of the LDMS 100. The license granting means 103 here is implemented using a network interface board, its driver software, a WWW server and CGI or Servlet. First, when the license request 409 transmitted from the client terminal 300 is received, the received license request 409 is transmitted to the license generating means 102. The format used for this transmission is that of the license issue request 410 illustrated in Fig. 31, the same as that in Fig. 30, though it is also conceivable to have the license granting means 103 process the data of the received license request 409 and supply the processed data.

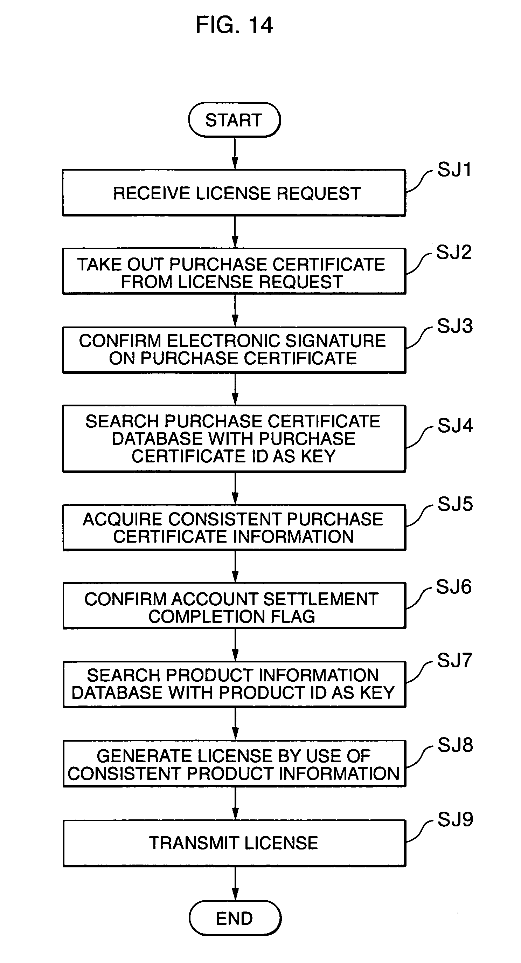

Fig. 14 is a flowchart showing the control operations of the license generating means 102 in this Embodiment 1. Processing by the license generating means 102 of the LDMS 100 will be described with reference to Fig. 14. At SJ1, a license request 409 is received from the license granting means 103. At SJ2, the purchase certificate 404 contained in the received license request 409 is taken out. At SJ3, if an electronic signature is affixed to the purchase certificate 404 acquired at SJ2, it will be checked whether or not the purchase certificate 404 has been altered by use of the electronic signature. At SJ4, the purchase certificate database 120 is searched with the purchase certificate ID contained in the purchase certificate 404 acquired at SJ2 being used as the key. At SJ5, as a result of the search at SJ4, a record in the format of Fig. 3, whose purchase certificate ID field is the purchase certificate ID used as the search key mentioned above, is specified, and the value of the account settlement completion flag field in the record is acquired. At SJ6, if the account settlement completion flag at SJ5 is 1, the next step will be executed, with the account settlement for the pertinent purchase certificate being assumed to have been completed.

At SJ7, the product information database 110 is searched with the product ID contained in the purchase certificate 404 being used as the key. At SJ8, as a result of the search at SJ7, a record in the format of Fig. 2, whose product ID field is the product ID used as the search key mentioned above, is acquired, and a license 411 in the format of Fig. 32 is generated by use of that record. This license 411 contains at least the product ID, the decryption key for digital contents and usage rules, and may also include other items of information. At SJ9, the license 411 generated at SJ8 is returned to the license granting means 103. Next will be described processing by the license granting means 103. When the license 411 has been received from the license generating means 102, the license 411 is returned to the client terminal 300 having transmitted the license request 409.

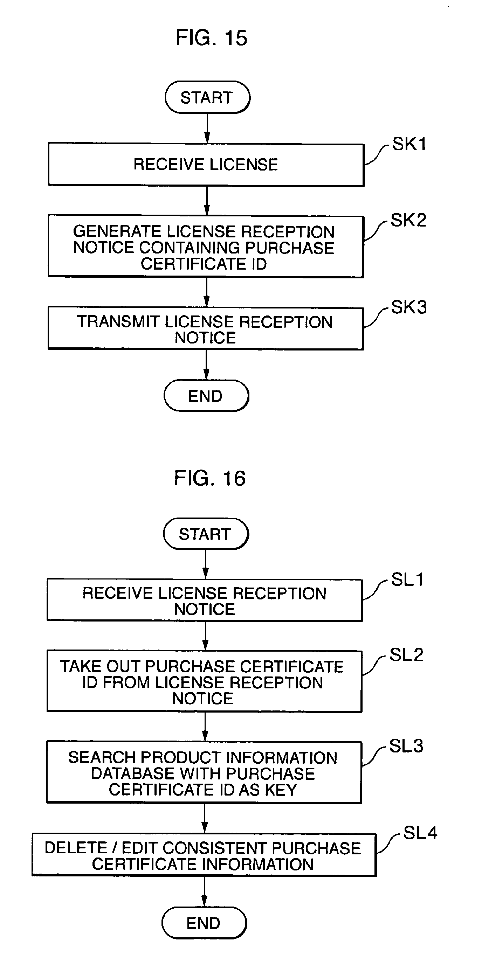

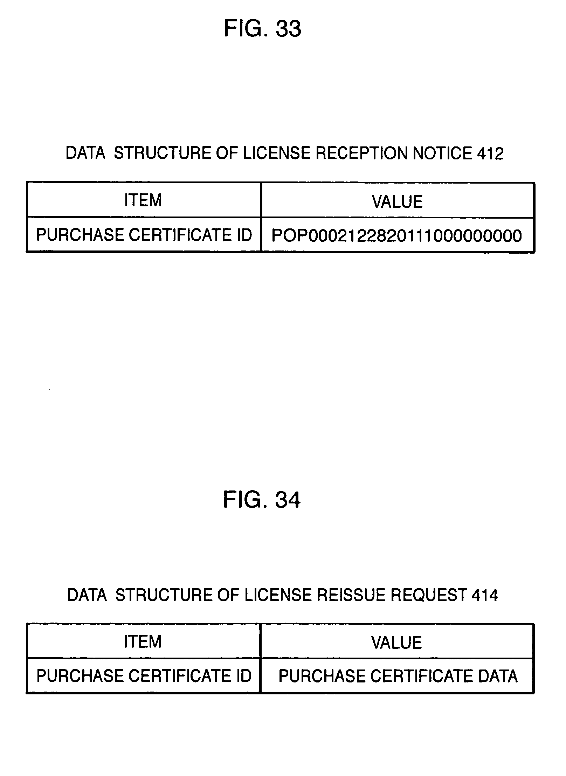

Fig. 15 is a flowchart showing the control operations of the client terminal 300 in this Embodiment 1. Processing at the client terminal 300 will be described with reference to Fig. 15. At SK1, a license 411 is received from the license granting means 103. At SK2, a license reception notice 412 in the format of Fig. 33 is generated. This license reception notice 412 contains at least the purchase certificate ID, and may also include other items of information. At SK3, the license reception notice 412 generated at SK2 is transmitted to the license granting means 103. In this process, the URL of the license granting means 103 can be acquired from the purchase certificate 404.

Fig. 16 is a flowchart showing the control operations of the license granting means 103 in this Embodiment 1. Processing by the license granting means 103 will be described below with reference to Fig. 16. At SL1, a license reception notice 412 is received from the client terminal 300. At SL2, the purchase certificate ID is taken out of the received license reception notice 412. At SL3, the purchase certificate database 120 is searched with the purchase certificate ID acquired at SL2 being used as the key. At SL4, as a result of the search at SL3, a record in the format of Fig. 3, whose purchase certificate ID field is the purchase certificate ID used as the search key mentioned above, is specified, and that record is deleted from the purchase certificate database 120. However, it is also possible to arrange so that, if the number of times the license can be granted is prescribed in the specified record, the upper limit of the number of times of the grant is decremented and, if the result of decrementing is 0, that record is deleted from the database.

The configuration described above makes it possible, because the "product" actually traded via the network is not digital contents themselves but the right (license) to use digital contents, for the user to watch and/or listen to digital contents by virtue of the pertinent one of the purchased licenses for the contents stored in advance at the user's terminal or the like, but the user need not make a network connection every time he or she wants to watch and/or listen to digital contents, and can do so even if his or her terminal has no function for network connection. Moreover, as the user need not make a membership registration with the license distribution management server 100 in order to purchase a license, his or her personal information can be protected from leakage.

Also, the purchase certificate providing means 201 can know unequivocally that the client has purchased a license by receiving from the client terminal 300 a reception certificate containing a purchase certificate and, as account settlement information is subsequently prepared, it is possible to prevent settlement processing from being started in spite of the interruption of data communication on the way and the resultant failure of the purchase certificate to reach the client terminal.

### Second Embodiment (Embodiment 2)

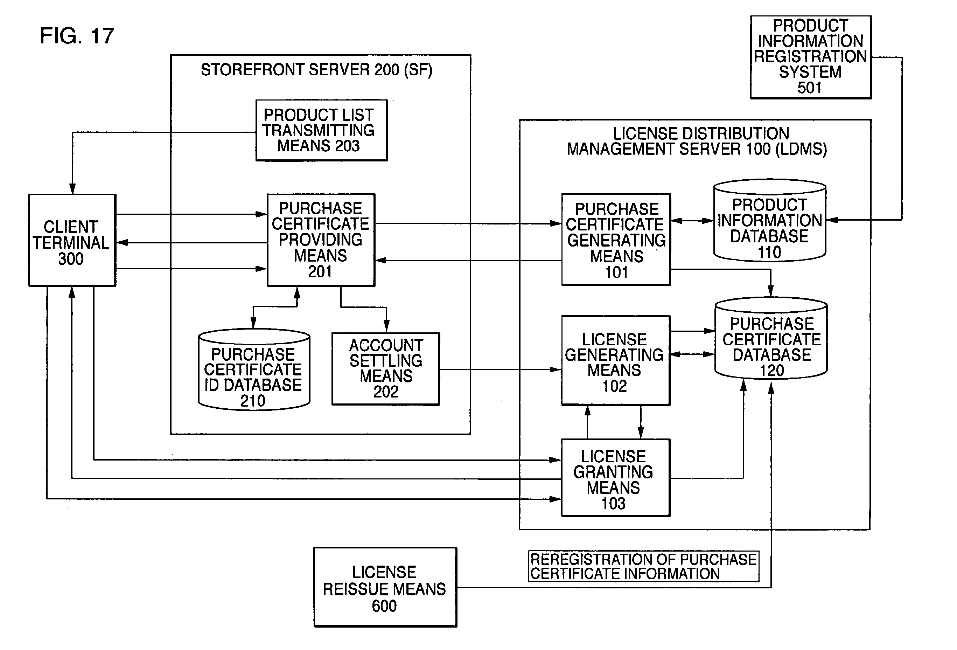

Fig. 17 is a block diagram of a license sale system, which is a second preferred embodiment of the invention. As shown inFig. 17, thelicensesalesystem, which is Embodiment 2, differs from Embodiment 1 shown in Fig. 1 in that it has a license reissue terminal 600 in addition to the license sale system. This license reissue terminal 600 is implemented using a network interface board, its driver software, a WWW server and CGI or Servlet.

Processing by the license sale system, which is Embodiment 2, will be described below. When the license 411 has become unusable because the user has replaced his or her PC with a newly bought one or formatted the hard disk drive in which the license 411 is stored or for any other reason, the user will write electronic mail expressing his or her wish to have the license issued again, and transmit it to a support center. In such a case, the terminal application program of the client terminal 300 on the user's side generates a license reissue request 414 of the data structure shown in Fig. 34 by use of the purchase certificate 404 stored in it. This license reissue request 414 contains the purchase certificate 404 of the pertinent license, and may also include other items of information. Then, the newly generated license reissue request 414 is transmitted to the support center disclosed in the SF 200.

At the support center, the person in charge receives the electronic mail transmitted from the user requesting the reissue of a license, extracts the accompanying purchase certificate 404, and enters it into the license reissue terminal 600.

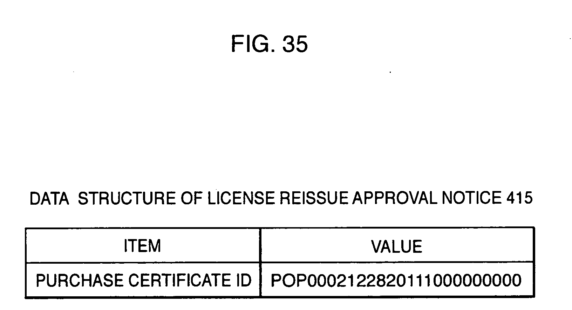

The license reissue terminal 600 registers information on the entered purchase certificate 404 into the purchase certificate database 120. The account settlement completion flag field of the record thereby registered is set to 1. Following the processing at the license reissue terminal 600, the person in charge returns to the user electronic mail to the effect that the center is ready to reissue the license. The format of a license reissue approval notice 415, which is that return notice, contains the purchase certificate ID stated in or attached to the electronic mail as shown in Fig. 35. The processing described above causes the client terminal 300 to function in the same way as in issuing a new license, making it possible for the user to have his or her license 411 reissued.

### Third Embodiment (Embodiment 3)

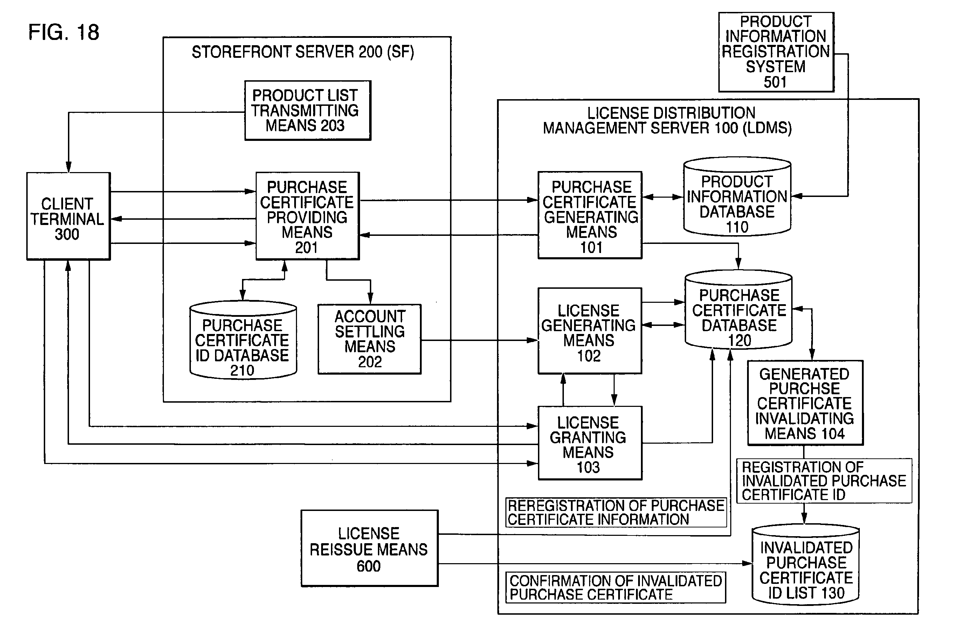

Fig. 18 is a block diagram of a license sale system, which is a third preferred embodiment of the invention. As shown in Fig. 18, the license sale system, which is Embodiment 3, differs from Embodiment 2 shown in Fig. 17 in that the LDMS 100 has generated purchase certificate invalidating means 104.

Processing by the license sale system, which is Embodiment 3, will be described below.

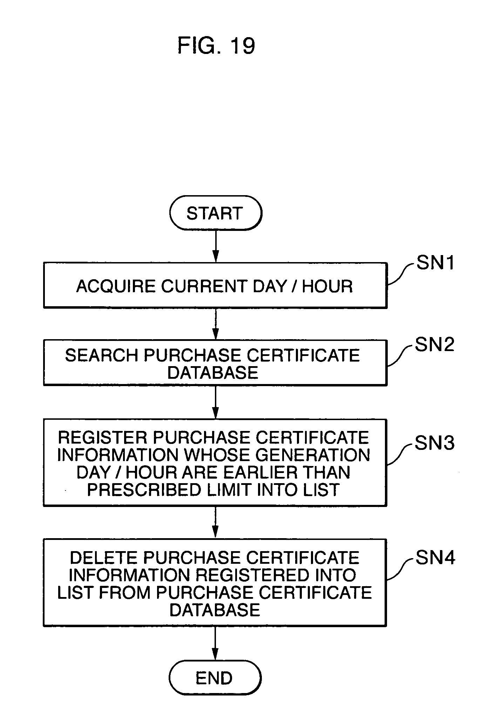

Fig. 19 is a flowchart showing the control operations of the generated purchase certificate invalidating means 104 in this Embodiment 3. Processing by the generated purchase certificate invalidating means 104 will be described below with reference to Fig. 19. At SN1, the current day/hour are acquired. The current day/hour can be easily acquired from the operating computer of the LDMS 100. At SN2, the purchase certificate database 120 is searched with respect to the generation day/hour field. At SN3, as a result of the search at SN2, a record the value of whose generation day/hour field is earlier than the current day/hour acquired at SN1 by, for instance, one week is specified, and the value of the purchase certificate ID field contained in that record is registered into an invalidated purchase certificate ID list 130. At SN4, the record specified at SN3 is deleted from the purchase certificate database 120. To add, the processing described above may be performed repetitively by, at the time of specifying each individual record, registering it into the invalidated purchase certificate ID list 130 and deleting the record from the purchase certificate database 120.

After that, the license reissue terminal 600, when registering information on the purchase certificate 404 into the purchase certificate database 120, searches the invalidated purchase certificate ID list 130 with the purchase certificate ID being used as the key, and processes the reissue of the license only when there is no record whose purchase certificate ID field is the purchase certificate ID used as the search key mentioned above.

The processing described above can prevent the number of records in the purchase certificate database 120 from increasing excessively by restraining the issue or reissue of licenses using the purchase certificates 404 having passed a certain period of time since their generation.

### Fourth Embodiment (Embodiment 4)

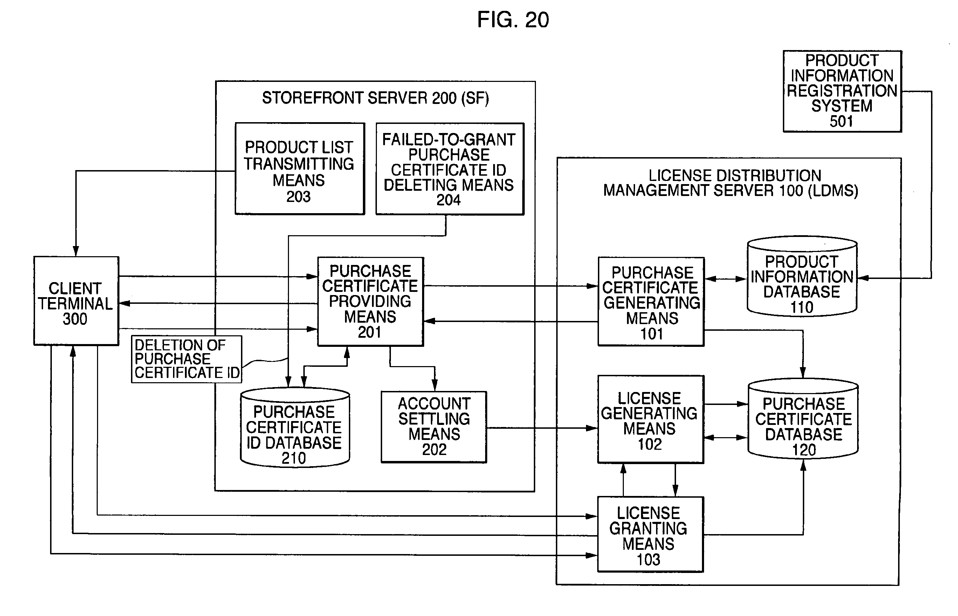

Fig. 20 is a block diagram of a license sale system, which is a fourth preferred embodiment of the invention. As shown in Fig. 20, the license sale system, which is Embodiment 4, differs from Embodiment 1 shown in Fig. 1 in that the SF 200 additionally has failed-to-grant purchase certificate deleting means 204.

Processing by the license sale system, which is Embodiment 4, will be described below.

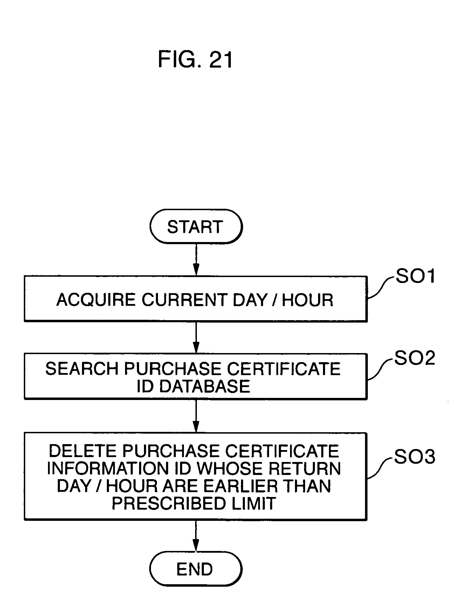

Fig. 21 is a flowchart showing the control operations of the failed-to-grant purchase certificate deleting means 204 in this Embodiment 4. Processing by the failed- to-grant purchase certificate deleting means 204 will be described below with reference to Fig. 21. At SO1, the current day/hour are acquired. The current day/hour can be easily acquired from the operating computer of the SF 200. At SO2, the purchase certificate ID database 210 is searched with respect to the return communication day/hour field. At SO3, as a result of the search at SO2, a record the value of whose return communication day/hour field is earlier than the current day/hour acquired at SO1 by, for instance, one week is specified, and the record is deleted from the purchase certificate ID database 210. The processing described above makes it possible to delete from the purchase certificate ID database 210 records having passed a certain period of time since their return to the client terminal, and thereby to prevent the number of records in the purchase certificate ID database 210 from increasing excessively.

As hitherto described, according to the present invention, as it is possible to settle the account of a license purchase only when the client terminal has received a purchase certificate, the performance of the account settlement of license trading and the grant of licenses can be made secure.

While the invention has been described with reference to preferred embodiments thereof illustrated in the accompanying drawings, it is obvious that persons skilled in the art can make various alterations and modifications without deviating from the true spirit of the invention. The invention covers all such alterations and modifications.

## Claims

1. A license distribution management server for distributing licenses for watching and/or listening to digital contents, having:
purchase certificate generating means for generating a purchase certificate on the basis of a license purchase request received via a network, and
license generating means for receiving a license request via the network and generating a license matching the purchase certificate contained in said license request.

2. The license distribution management server according to Claim 1, further provided with a purchase certificate database for holding said purchase certificates, wherein:
said license generating means, on the basis of an account settlement completion notice received via the network, register account settlement completion information matched with the purchase certificate into said purchase certificate database.

3. The license distribution management server according to Claim 2, wherein said account settlement completion information includes at least information concerning the number of times a license can be granted.

4. The license distribution management server according to Claim 2, wherein said license generating means generate a license when the purchase certificate contained in the license request received via the network is included in said purchase certificate database and pertinent account settlement completion information is registered.

5. The license distribution management server according to Claim 2, further provided with license granting means for distributing said licenses, wherein:
said license granting means, when having received a reception notice for said license via the network, delete the purchase certificate matching said license from said purchase certificate database.

6. The license distribution management server according to Claim 3, further provided with license granting means for distributing said licenses, wherein:
said license granting means, when having received a reception notice for said license via the network, update the number of times said contents are provided.

7. The license distribution management server according to Claim 1, wherein said purchase certificate generating means generate a purchase certificate to which an electronic signature by which any alteration of said purchase certificate can be detected is generated and detects the presence or absence of the alteration on the basis of the electronic signature contained in the reception notice of the purchase certificate returned from a client terminal.

8. The license distribution management server according to Claim 1, wherein said purchase certificate generating means generate a purchase certificate to which an ID for distinguishing each individual purchase certificate is attached, register said ID into said purchase certificate database, collate the ID contained in the reception notice of the purchase certificate returned from the client terminal with said purchase certificate database and, if the ID is found consistent, instruct said license generating means to generate a license.

9. The license distribution management server according to Claim 2, further provided with generated purchase certificate invalidatingmeansfordeleting, out of the purchase certificates storedinsaidpurchasecertificatedatabase, thosehavingpassed a certain period of time since their generation.

10. A license reissue device requesting a license distribution management server provided with a purchase certificate database holding license purchase certificates and account settlement information to regenerate purchase certificates and account settlement information already deleted from said purchase certificate database.

11. The license reissue device according to Claim 10, wherein said license reissue device requests said license distribution management server also to regenerate information regarding the number of times the license has been granted.

12. A storefront server for selling licenses for digital contents, comprising:
account settling means for settling accounts of license trading, and
purchase certificate providing means for transmitting a purchase certificate to a client terminal having sent a pertinent purchase request, wherein:
said purchase certificate providing means, when having received a reception notice of a purchase certificate from said client terminal, instruct said account settling means to settle a pertinent account.

13. The storefront server according to Claim 12, wherein said purchase certificate providing means, when having received the reception notice of said purchase certificate, transmit a request for detection of the presence or absence of alteration of a purchase acknowledging signature contained in the reception notice.

14. The storefront server according to Claim 12, further provided with a purchase certificate ID database for holding IDs for distinguishing said purchase certificate, wherein:
said purchase certificate providing means transmit the purchase certificate, register the ID of said purchase certificate into said purchase certificate ID database, collate an ID of a purchase certificate returned from said client, when it has been received, with said purchase certificate ID database and, if the ID is found consistent, instruct said account settling means to settle the pertinent account.

15. The storefront server according to Claim 12, further provided with a purchase certificate ID database for holding IDs for distinguishing a purchase certificate container containing one or more purchase certificates, wherein:
said purchase certificate providing means generate and transmit said purchase certificate container, register an ID of said purchase certificate container into said purchase certificate ID database, collate an ID of a purchase certificate returned from said client, when it has been received, with said purchase certificate ID database and, if the ID is found consistent, instruct said account settling means to settle the pertinent account.

16. The storefront server according to Claim 14, wherein said purchase certificate providing means, if the ID is found consistent as a result of the collation, delete the pertinent ID from said purchase certificate ID database.

17. The storefront server according to Claim 15, wherein said purchase certificate providing means, if the ID is found consistent as a result of the collation, delete the pertinent ID from said purchase certificate ID database.

18. The storefront server according to Claim 14, wherein said purchase certificate providing means are provided with failed- to-grant purchase certificate deleting means which, when a prescribed length of time has passed since the time a purchase certificate was transmitted, delete the pertinent ID from said purchase certificate ID database.

19. A client terminal for purchasing licenses for digital contents, which:
receives and holds a purchase certificate via a network, transmits a reception notice of the purchase certificate and, when it transmits a license request, attaches said held purchase certificate to the license request.
